# EUROPÄISCHE PATENTSCHRIFT

(11) **EP 3 410 241 B1**
(45) Veröffentlichungstag und Bekanntmachung des Hinweises auf die Patenterteilung: **25.10.2023**
(21) Anmeldenummer: 18170998.1
(22) Anmeldetag: 07.05.2018
(51) Int. Cl.: G05B 19/042, G06F 21/31

(54) **VERFAHREN ZUR SICHEREN KOMMUNIKATION MIT EINEM FELDMESSGERÄT DER PROZESSTECHNIK UND ENTSPRECHENDES FELDMESSGERÄT**
METHOD FOR SECURE COMMUNICATIONS WITH A FIELD MEASURING DEVICE USED FOR PROCESS TECHNOLOGY AND CORRESPONDING FIELD MEASURING INSTRUMENT
PROCÉDÉ DE COMMUNICATION SÉCURISÉE AVEC UN APPAREIL DE MESURE DE TERRAIN DU PROCESSUS INDUSTRIEL ET APPAREIL DE MESURE DE TERRAIN CORRESPONDANT

(30) Priorität: 31.05.2017 DE 102017111933
(43) Veröffentlichungstag der Anmeldung: 05.12.2018
(73) Patentinhaber: Krohne Messtechnik GmbH, 47058 Duisburg (DE)
(72) Erfinder: Spiegel, Christoph, 46049 Oberhausen (DE)
(74) Vertreter: Gesthuysen Patentanwälte

(56) Entgegenhaltungen:
- EP-A2- 1 621 944
- EP-B1- 1 621 944
- WO-A1-2016/060738
- WO-A1-2018/157960
- DE-A1- 10 255 517
- DE-A1-102007 046 079
- DE-A1-102011 078 030
- DE-A1-102012 108 866
- Anonymous: "Zwei-Faktor-Authentisierung - Wikipedia", , 20. März 2017 (2017-03-20), XP055510294, Gefunden im Internet: URL:https://de.wikipedia.org/w/index.php?t itle=Zwei-Faktor-Authentisierung&oldid=163 780849 [gefunden am 2018-09-26]

## Beschreibung

Die Erfindung betrifft ein Verfahren zur sicheren Kommunikation mit einem Feldmessgerät der Prozessmesstechnik, wobei das Feldmessgerät einen Sensor, eine Auswerteeinheit, eine Feldbusschnittstelle zur Übermittlung der von dem Feldmessgerät erfassten und bereitgestellten Messdaten an andere Busteilnehmer und/oder an ein Prozessleitsystem und eine Kommunikationseinheit mit einer Kommunikationsschnittstelle aufweist, wobei auf der Kommunikationseinheit ein Webserver implementiert ist und wobei mittels der Kommunikationsschnittstelle von extern auf den Webserver zugegriffen werden kann. Darüber hinaus betrifft die Erfindung auch ein Feldmessgerät der Prozesstechnik mit einem Sensor, einer Auswerteeinheit, einer Feldbusschnittstelle zur Übermittlung der von dem Feldmessgerät erfassten und bereitgestellten Messdaten an andere Busteilnehmer und/oder an ein Prozessleitsystem und einer Kommunikationseinheit, wobei die Kommunikationseinheit eine Kommunikationsschnittstelle aufweist, wobei auf der Kommunikationseinheit ein Webserver implementiert ist, wobei mittels der Kommunikationsschnittstelle von extern auf den Webserver zugegriffen werden kann.

Feldmessgeräte der Prozessmesstechnik werden seit vielen Jahrzehnten in der Automatisierungstechnik zur Messwerterfassung in industriellen Prozessen eingesetzt. Die Feldmessgeräte erfassen messtechnisch über ihre Sensoren Prozessgrößen, bereiten die Rohmessdaten mit der Auswerteeinheit in eine zu übermittelnde Messgröße auf und übertragen diese Messgröße meist an weitere Busteilnehmer oder an ein übergeordnetes Prozessleitsystem. Die Messgeräte arbeiten "im Feld", sie sind im Regelfall sehr robust und störsicher ausgelegt, da sie allen Widrigkeiten des industriellen Prozesses ausgesetzt sind, teilweise werden sie im Freien eingesetzt, es liegen üblicherweise also keine "Laborbedingungen" vor.

Zur Übermittlung der Messdaten bedient sich das Feldgerät einer Feldbusschnittstelle, die ein etabliertes Protokoll realisiert. Zu den etablierten Feldbusschnittstellen gehören beispielsweise die seit Jahrzehnten eingesetzte analoge 4-20 mA-Schnittstelle oder auch die digitale HART-Schnittstelle. Als physikalisches Übertragungsmedium dient in diesem Fall oft eine 2-Leiter-Anordnung, wobei dem analogen Stromsignal der Stromschnittstelle das digitale Signal des HART-Protokolls aufmoduliert wird. Feldbusschnittstellen dieser Art realisieren nur vergleichsweise geringe Übertragungsraten, gleichwohl haben sie eine außerordentlich hohe Bestandskraft in der Prozessindustrie, da ihre Zuverlässigkeit nachgewiesen ist und sie als beeinflussungssicher gelten. Über Feldbusschnittstellen kann oft nur in sehr beschränktem Maße auf das Feldmessgerät Einfluss genommen werden, da ein Zugriff auf Funktionalitäten des Prozessmessgeräts, die außerhalb der eigentlichen Übertragung von Messergebnissen liegen, über die Feldbusschnittstelle - absichtlich - überhaupt nicht vorgesehen sind.

Sensible und damit zu schützende Funktionalitäten von Feldmessgeräten, die außerhalb des Bereichs der Messdatenübertragung liegen, betreffen beispielsweise die Parametrierung, die Einstellung von Betriebsmodi, Kalibrierungsparameter des Prozessmessgeräts und die Diagnose.

Seit einiger Zeit gehen Bestrebungen dahin, die zuvor beschriebenen Feldmessgeräte mit einer - weiteren - Kommunikationsschnittstelle auszustatten, mit der meist modernere Kommunikationstechnologien realisiert werden, sodass höhere Übertragungsraten und moderne Bedienschnittstellen umsetzbar sind. Über diese Kommunikationsschnittstelle sollen im Wesentlichen nichtprozessrelevante Daten ausgetauscht werden, also Daten, bei denen es sich gerade nicht um die eigentlichen Messdaten handelt.

Gegenstand der vorliegenden Betrachtung sind solche Feldmessgeräte, die mit einer Kommunikationseinheit ausgestattet sind, auf der ein Webserver implementiert ist. Von extern kann dann über die so ausgestaltete Kommunikationsschnittstelle mittels eines Webbrowsers zugegriffen werden, wobei zumeist standardisierte Übertragungsprotokolle und Netzwerkprotokolle verwendet werden. Eine solche Kommunikationsschnittstelle eröffnet prinzipbedingt einen zwar leichteren, dafür aber weniger gut kontrollierbaren Zugriff auf das Feldmessgerät, sodass ein besonderes Augenmerk auf den Schutz der Kommunikationsschnittstelle vor unautorisiertem Zugriff gelegt werden muss.

Aus dem Stand der Technik ist bekannt, das Feldmessgerät gegen massenhafte Korrumpierungsversuche dadurch zu schützen, dass auf dem Feldmessgerät nach dem Vorbild anderer webbasierter Anwendungen eine Captcha-Funktionalität hinterlegt wird. Durch diese Funktionalität kann bei der Kontaktaufnahme durch ein externes Kommunikationsmittel in einem gewissen Rahmen entschieden werden, ob dieses externe Kommunikationsmittel ein Mensch oder eine Maschine ist. Häufig werden im Rahmen der Captcha-Funktionalität Aufgaben gestellt, die von Menschen einfach gelöst werden können, von Computern jedoch nicht. Bei diesen Aufgaben handelt es sich beispielsweise um das Erkennen von bildhaft dargestellten Gegenständen, von verzerrten Schriftzügen oder dem Lösen einer einfachen Rechenaufgabe. Der Nachteil dieser Technik besteht darin, dass derartige Funktionalitäten mit den oft nur begrenzten hardwaremäßigen Mitteln eines Feldmessgeräts nicht oder nur schwer zu realisieren sind oder nur in sehr vereinfachter Weise zu realisieren sind, sodass eine Lösung der gestellten Aufgabe auch durch einen Computer in Griffweite ist. Zudem schützt die angesprochene Captcha-Funktionalität auch nicht davor, dass ein Mensch als nicht autorisiertes externes Kommunikationsmittel sich ohne Weiteres Zugang zu dem Feldmessgerät verschaffen kann. Dokument WO2018157960 ist ein vorveröffentlichtes Dokument gemäß A.54(3) EPÜ und offenbart die Authentifizierung eines Nutzers für den Zugang zu einem Feldgerät. Dokument DE102012108866A1 offenbart, wie bei einem Feldgerät eine Unterscheidung von Computern und Menschen mittels "CAPTCHA-Funktionalität" implementiert werden kann. Dokument DE102011078030A1 offenbart ein Verfahren zum Betreiben eines Feldgeräts, welches eine "Feldbusschnittstelle" sowie eine Webbrowser-Webserver-Kommunikationsschnittstelle aufweist.

Aufgabe der vorliegenden Erfindung ist es, ein Verfahren zur sicheren Kommunikation mit einem Feldmessgerät der Prozessmesstechnik und ein entsprechendes Feldmessgerät anzugeben, bei dem mit hoher Sicherheit ein missbräuchlicher Zugriff auf das Feldmessgerät mittels einer Kommunikationsschnittstelle, nämlich einer von der Feldbusschnittstelle verschiedenen Kommunikationsschnittstelle, mit einem Webserver verhindert wird.

Die Aufgabe ist bei dem eingangs beschriebenen Verfahren zur sicheren Kommunikation mit einem Feldmessgerät der Prozessmesstechnik zunächst und im Wesentlichen dadurch gelöst, dass bei Kontaktaufnahme durch ein externes Kommunikationsmittel mit dem Webserver über die Kommunikationsschnittstelle von dem Feldmessgerät eine erste Echtheitsprüfung des externen Kommunikationsmittels ausgeführt wird und eine zweite Echtheitsprüfung des externen Kommunikationsmittels ausgeführt wird. Nach erfolgreicher Absolvierung der ersten Echtheitsprüfung und der zweiten Echtheitsprüfung wird von dem Feldmessgerät eine weitere Kommunikation mit dem externen Kommunikationsmittel mit dem Webserver autorisiert. Insbesondere ist vorgesehen, dass über die Kommunikationsschnittstelle nur solche Daten ausgetauscht werden können, bei denen es sich gerade nicht um die eigentlichen Messdaten handelt.

Bei dem externen Kommunikationsmittel kann es sich um einen Menschen handeln, es kann sich aber auch um ein maschinelles automatisiertes Kommunikationsmittel handeln, wie beispielsweise um einen Diagnoserechner, dies ist nicht von Bedeutung. Bei der ersten Echtheitsprüfung und der zweiten Echtheitsprüfung handelt es sich also ausdrücklich nicht um eine Captcha-Funktionalität zur Unterscheidung zwischen menschlichen und maschinellen externen Kommunikationsmitteln. Bei der ersten und der zweiten Echtheitsprüfung geht es um den Nachweis einer Zugriffsbefugnis des externen Kommunikationsmittels unabhängig davon, ob es sich um einen Menschen oder eine Maschine handelt. Durch die Implementierung zweier Echtheitsprüfungen ist ein erheblich größeres Maß an Zugriffsicherheit realisierbar als beispielsweise mit nur einer Echtheitsprüfung kombiniert mit einer Captcha-Funktionalität. Erst nach erfolgreicher Absolvierung beider Echtheitsprüfungen, denen sich das externe Kommunikationsmittel unterziehen muss, ist eine weitere Kommunikation zwischen dem Feldmessgerät und dem externen Kommunikationsmittel über die Kommunikationsschnittstelle, die mit einem Webserver hinterlegt ist, möglich. Die Erfindung wird durch ein Verfahren gemäß Anspruch 1 sowie einen Apparat gemäß Anspruch 10 offenbart.

Gemäß einer vorteilhaften Ausgestaltung des Verfahrens ist vorgesehen, dass bei der ersten Echtheitsprüfung und der zweiten Echtheitsprüfung ein Merkmal des externen Kommunikationsmittels überprüft wird, wobei das Merkmal zu einer der Identifikationskategorien zugehörig ist: das individuelle, immaterielle Identifikationswissen eines menschlichen externen Kommunikationsmittels, der Besitz eines materiellen oder immateriellen Identifikationsmittels oder ein biometrisches Merkmal eines menschlichen externen Kommunikationsmittels. Den aufgezeigten Identifikationskategorien ist gemein, dass ihre Merkmale nicht durch kognitive Leistungen, seien es kognitive Leistungen eines Menschen oder eines Computers, erschlossen werden können. Die Echtheitsprüfungen können also nur erfolgreich absolviert werden, wenn fest definierte Identifikationsmerkmale fehlerfrei präsentiert werden. Die fest definierten Identifikationsmerkmale sind damit keine durch einfache Schlussfolgerungen erzielte Ergebnisse einer Aufgabenstellung. Gemäß einer bevorzugten Ausgestaltung ist bei dem Verfahren vorgesehen, dass bei der ersten Echtheitsprüfung und der zweiten Echtheitsprüfung Merkmale verschiedener Identifikationskategorien überprüft werden. Die dadurch erzielte Sicherheit ist in besonderem Maße einleuchtend, wenn konkrete Beispiele für Merkmale der verschiedenen Identifikationskategorien herangezogen werden.

Gemäß einer Ausgestaltung des Verfahrens handelt es sich bei dem individuellen, immateriellen Identifikationswissen eines menschlichen externen Kommunikationsmittels um ein Passwort, eine Geheimzahl (PIN) oder um die Antwort auf eine Sicherheitsfrage. Bei der Sicherheitsfrage wird wiederum individuelles Tatsachenwissen abgefragt, es geht bei der Sicherheitsfrage nicht um die Erbringung einer kognitiven Leistung, die quasi von jedermann erbracht werden kann. Eine weitere Ausgestaltung des Verfahrens zeichnet sich dadurch aus, dass das materielle oder immaterielle Identifikationsmittel eine Chipkarte, insbesondere in Form einer Smartcard oder einer Signaturkarte, eine Magnetstreifenkarte, ein RFID-Chip, ein kryptografischer Schlüssel, insbesondere in Form eines Private Keys oder eines Public Keys eines asymmetrischen Verschlüsselungsverfahrens, eine SIM-Karte, ein digitales Zertifikat, insbesondere ein SSL-Zertifikat, ein One-Time-PIN, insbesondere für SecurID. oder eine geräteindividuelle Maschinenkennung, insbesondere die Seriennummer einer Hardwarekomponente einer angeschlossenen Hardware ist.

Die Sicherheit lässt sich bei den vorgenannten materiellen oder immateriellen Identifikationsmitteln noch dadurch erhöhen, dass das Identifikationsmittel nur einmalig oder nur temporär vergeben wird. Dies ist beispielsweise der Fall, wenn eine One-Time-Pin vergeben wird oder wenn mit zeitlich begrenzten SSL-Zertifikaten gearbeitet wird.

Bei einer Weiterbildung des Verfahrens ist vorgesehen, dass es sich bei dem biometrischen Merkmal eines menschlichen externen Kommunikationsmittels um einen Fingerabdruck, um Gesichtskonturen, um die Stimme, um die Iris des Auges, um die Retina des Auges (also den Augenhintergrund), um die Handschrift, beispielsweise in Form einer Unterschrift, um die Handgeometrie oder um die Handlinienstruktur handelt.

Beim bevorzugten Ausführungsbeispiel des Verfahrens zur sicheren Kommunikation mit einem Feldmessgerät ist ferner vorgesehen, dass bei fehlgeschlagener erster Echtheitsprüfung und/oder zweiter Echtheitsprüfung das Feldgerät den Fehlversuch signalisiert und erst nach einem vorgegebenen Zeitintervall eine Wiederholung der Echtheitsprüfungen erfolgt. Vorzugsweise wird bei Überschreiten einer vorgegebenen Anzahl aufeinander folgender Fehlversuche eine jegliche weitere Kontaktaufnahme unterbunden und es werden keine Echtheitsprüfungen mehr durchgeführt, sodass es unmöglich ist, über die Kommunikationsschnittstelle Zugang zu dem Feldmessgerät zu erhalten. Eine solche Sperre kann dann nur durch weitere Maßnahmen wieder aufgelöst werden, die vorzugsweise nicht im Zusammenhang mit der Kommunikationsschnittstelle der Kommunikationseinheit mit Webserver stehen.

Eine Weiterbildung des vorgenannten Verfahrens zeichnet sich dadurch aus, dass das Feldgerät dem externen Kommunikationsmittel nur signalisiert, dass die Echtheitsprüfung insgesamt fehlgeschlagen ist, nicht jedoch welche der beiden Echtheitsprüfungen oder beide Echtheitsprüfungen. Durch diese Maßnahmen ist es einem kompromittierenden externen Kommunikationsmittel unmöglich ein möglicherweise richtig erratenes Identifikationsmittel zu erkennen, sodass weitere Angriffe stets auf beide Echtheitsprüfungen gerichtet werden müssen.

Die zuvor aufgezeigte Aufgabe wird bei dem eingangs geschilderten Feldmessgerät der Prozessmesstechnik dadurch gelöst, dass bei Kontaktaufnahme durch ein externes Kommunikationsmittel mit dem Webserver über die Kommunikationsschnittstelle von dem Feldmessgerät eine erste Echtheitsprüfung des externen Kommunikationsmittels ausgeführt wird und eine zweite Echtheitsprüfung des externen Kommunikationsmittels ausgeführt wird, wobei nach erfolgreicher Absolvierung der ersten Echtheitsprüfung und der zweiten Echtheitsprüfung von dem Feldgerät eine weitere Kommunikation mit dem externen Kommunikationsmittel mit dem Webserver autorisiert wird.

Die Echtheitsprüfungen werden auf den technischen Mitteln des Feldmessgeräts implementiert. Also beispielsweise durch entsprechende Programmierungen von Recheneinheiten, die üblicherweise Bestandteil des Feldgeräts sind, und mit denen üblicherweise die Funktionalitäten der Auswerteeinheit und der Kommunikationseinheit realisiert werden. Je nach technischer Umsetzung können die Auswerteeinheit und die Kommunikationseinheit hardwaremäßig durch separate Elemente ausgebildet sein, was insbesondere hinsichtlich sicherheitstechnischer Fragestellungen vorteilhaft ist. Die Auswerteeinheit könnte beispielsweise durch eine fest verdrahtete Schaltung realisiert sein, die Operationsverstärker, Analog/Digital-Wandler usw. aufweist, während die Kommunikationseinheit im Wesentlichen auf Basis eines programmierten Mikrocontrollers realisiert ist oder auch auf Basis eines festprogrammierten Gatterbausteins (FPGA). Die Kommunikationsschnittstelle wird möglicherweise durch geeignete Treiberbausteine oder auch durch einen diskreten Schaltungsaufbau realisiert, sofern die Mittel des verwendeten Mikrocontrollers nicht ausreichend sind.

Das Feldmessgerät weist neben der Kommunikationsschnittstelle eine Feldbusschnittstelle auf, über die im Wesentlichen Messdaten des Feldmessgeräts übertragen werden; diese Feldbusschnittstelle ist also essentiell für die eigentliche Funktionalität des Feldmessgeräts, nämlich Messdaten bereitzustellen. Bei dieser Feldbusschnittstelle handelt es sich beispielsweise um eine analoge Stromschnittstelle, bei der Messwerte durch die Stromhöhe im Bereich von 4 mA bis 20 mA codiert werden. Andere Beispiele für typische Feldbusprotokolle sind HART oder Profibus. Es gibt zahlreiche andere etablierte Feldbusschnittstellen und -protokolle. Die von dem Feldmessgerät ermittelten Messwerte werden meist exklusiv über diese Feldbusschnittstelle übertragen. Das hier vorgestellte Verfahren und das hier vorgestellte Feldmessgerät sind aus sicherheitstechnischen Überlegeungen besonders dann vorteilhaft, wenn die über die Kommunikationsschnittstelle zugreifbaren bzw. übermittelbaren Daten gerade keine Messdaten sind. Es können innerhalb des Feldmessgeräts verschiedene Maßnahmen ergriffen werden, um den Bereich der über die Feldbusschnittstelle und über die Kommunikationsschnittstelle zugreifbaren Daten strikt voneinander zu trennen. Dies ist im Detail aber nicht Gegenstand der vorliegenden Patentanmeldung.

Das erfindungsgemäße Feldmessgerät ist vorzugsweise so ausgestaltet, dass es das zuvor erläuterte Verfahren zur sicheren Kommunikation gerätetechnisch umsetzt, das Verfahren ist also gerätetechnisch auf dem Feldmessgerät automatisch ausführbar implementiert. Die Implementierung erfolgt insbesondere durch entsprechende Programmierung und/oder hardwaremäßige Realisierung der Auswerteeinheit und/oder der Kommunikationseinheit.

In einer bevorzugten Ausgestaltung ist die Kommunikationsschnittstelle der Kommunikationseinheit als Funkschnittstelle ausgebildet, vorzugsweise als Funkschnittstelle gemäß dem WLAN-Standard. Dies ermöglicht den Zugriff auf das Feldmessgerät auch mit Geräten der Consumer-Elektronik, also beispielsweise mit Handys oder Tablets. Durch die erfindungsgemäß implementierten Echtheitsprüfungen ist der Zugriff auf das Feldmessgerät trotz der Verwendung von Standard-Kommunikationsschnittstellen sicher.

Bei einer weiteren Ausgestaltung des erfindungsgemäßen Feldmessgeräts ist vorgesehen, dass die Kommunikationsschnittstelle der Kommunikationseinheit als kabelgebundene Ethernetschnittstelle ausgebildet ist. Vorzugsweise realisiert die Kommunikationseinheit mit der Kommunikationsschnittstelle ein TCP/IP-Protokoll.

Der Zugriff auf das Feldmessgerät sieht dann also üblicherweise so aus, dass das externe Kommunikationsmittel mittels eines implementierten Webbrowsers den auf der Kommunikationseinheit des Feldmessgeräts implementierten Webserver kontaktiert. Dies kann beispielsweise durch Eingabe einer bestimmten Netzwerkadresse geschehen oder durch Auswahl des Feldmessgeräts aus einer auf dem externen Kommunikationsmittel angezeigten Liste aller theoretisch verfügbaren Kommunikationspartner. Bei der Kontaktaufnahme durch das externe Kommunikationsmittel werden automatisch die entsprechenden Echtheitsprüfungen durchgeführt, beispielsweise durch Anzeige eines Eingabefeldes zur Eingabe eines Identifikationsmerkmals und/oder durch Aufforderung des Nachweises des Besitzes eines materiellen oder immateriellen Identifikationsmittels. Das Feldmessgerät kann bei der Echtheitsprüfung auch Merkmale des externen Kommunikationsmittels abrufen, wie beispielsweise die Seriennummer des in dem externen Kommunikationsmittel verbauten Prozessors.

Im Einzelnen gibt es nun eine Vielzahl von Möglichkeiten, das erfindungsgemäße Verfahren zur sicheren Kommunikation mit einem Feldmessgerät und das entsprechende Feldmessgerät weiterzubilden. Entsprechende Weiterbildungen sind Gegenstand der Unteransprüche und werden nachfolgend anhand von dargestellten Ausführungsbeispielen beschrieben. In der Zeichnung zeigen:
- Fig. 1: eine schematische Darstellung eines Feldmessgeräts der Prozesstechnik im Kontext eines industriellen Prozesses sowie schematisch ein Verfahren zur sicheren Kommunikation mit dem Feldmessgerät,
- Fig. 2: mehrere Ausgestaltungen des Verfahrens zur sicheren Kommunikation mit dem Feldmessgerät und
- Fig. 3a, 3b: zwei Varianten des Feldmessgeräts mit verschieden ausgestalteten Kommunikationsschnittstellen.

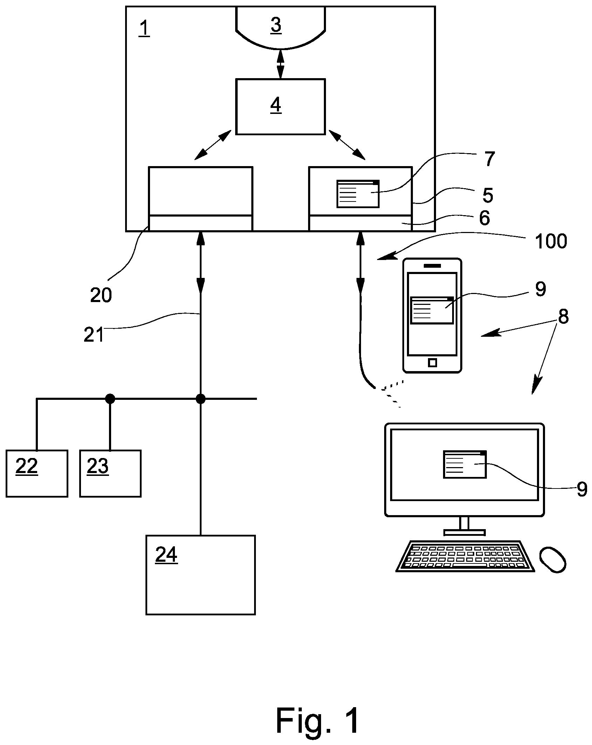

Fig. 1 zeigt schematisch ein Feldmessgerät 1 der Prozesstechnik sowie ebenfalls schematisch ein Verfahren 2 zur sicheren Kommunikation mit einem Feldmessgerät 1. Das Feldmessgerät 1 weist einen Sensor 3, eine Auswerteeinheit 4, eine Feldbusschnittstelle 20 zur Übermittlung der von dem Feldmessgerät erfassten und bereitgestellten Messdaten an andere Busteilnehmer 22, 23 und/oder an ein Prozessleitsystem 24 und eine Kommunikationseinheit 5 mit einer Kommunikationsschnittstelle 6 auf. Die Auswerteeinheit 4 dient der Erfassung und Weiterverarbeitung der von dem Sensor 3 gelieferten Rohmessdaten.

Ein externes Kommunikationsmittel 8 kann mit dem Webserver 7 über die Kommunikationsschnittstelle 6 informationstechnisch Kontakt aufnehmen 100. In Fig. 1 sind für das externe Kommunikationsmittel 8 ein Smartphone oder ein Tablet und ein Arbeitsplatzrechner schematisch dargestellt. Bei der Kontaktaufnahme 100 werden entsprechende Informationen, die von dem Webserver 7 zur Verfügung gestellt werden, mittels eines Webbrowsers 9 auf dem externen Kommunikationsmittel 8 dargestellt. Das externe Kommunikationsmittel 8 ist hier also ein Client des Webservers 7.

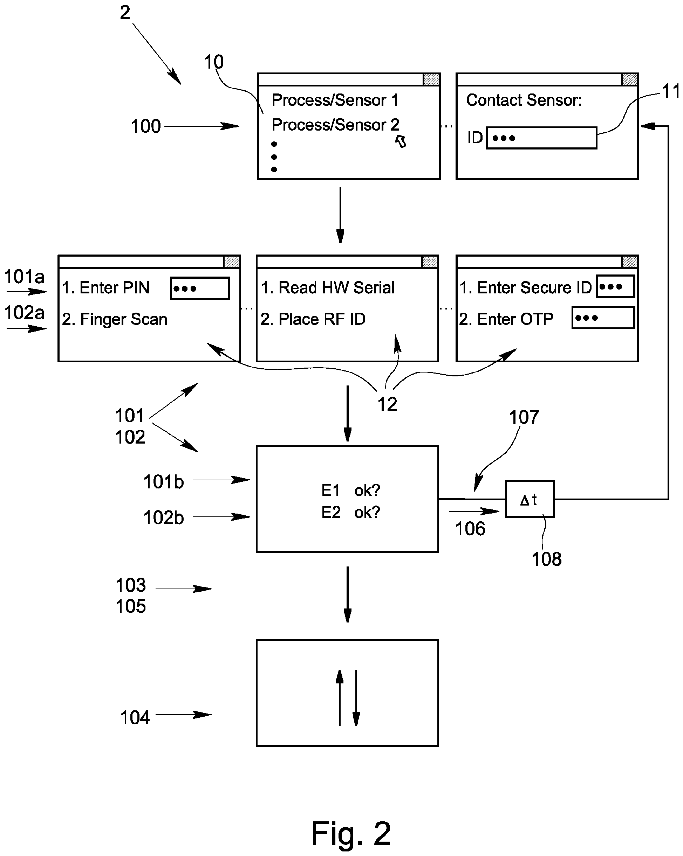

In Fig. 2 sind schematisch die verschiedenen Verfahrensschritte des Verfahrens 2 zur sicheren Kommunikation mit dem Feldmessgerät 1 dargestellt. Im Rahmen der Kontaktaufnahme 100 wird durch das externe Kommunikationsmittel 8 ein Kontakt mit dem Feldmessgerät 1 hergestellt. Die Kontaktaufnahme 100 ist hier symbolisiert durch die Auswahl 10 verschiedener Kommunikationspartner auf einer Anzeige des externen Kommunikationsmittels 8 oder durch Eingabe einer Kennung (ID) des zu kontaktierenden Feldmessgeräts 1, angedeutet durch ein Eingabefeld 11.

Nach der erfolgten Kontaktaufnahme 100 wird von dem Feldmessgerät 1 eine erste Echtheitsprüfung 101 des externen Kommunikationsmittels 8 ausgeführt und wird von dem Feldmessgerät 1 ferner eine zweite Echtheitsprüfung 102 des externen Kommunikationsmittels 8 ausgeführt. Bei den Echtheitsprüfungen 101, 102 handelt es sich ausdrücklich nicht um Captcha-Funktionalitäten, die grundsätzlich nur dazu geeignet ist, in einem gewissen Rahmen zwischen einem menschlichen und einem maschinellen externen Kommunikationsmittel 8 zu unterscheiden.

Die Echtheitsprüfungen 101, 102 sind in Fig. 2 zweischrittig dargestellt. Bei den ersten Teilschritten 101a, 102a der Echtheitsprüfungen 101, 102 erfolgt zunächst eine Erfassung der auf Echtheit zu überprüfenden Merkmale 12. In den zweiten Teilschritten 101b, 102b der Echtheitsprüfungen 101, 102 erfolgt dann die tatsächliche Überprüfung der nun vorhandenen Merkmale 12 auf ihre Echtheit. Nach erfolgreicher Absolvierung 103 der ersten Echtheitsprüfung 101 und der zweiten Echtheitsprüfung 102 wird von dem Feldmessgerät 1 eine weitere Kommunikation 104 mit dem externen Kommunikationsmittel 8 autorisiert 105.

Bei der ersten Echtheitsprüfung 101 und der zweiten Echtheitsprüfung 102 werden Merkmale 12 des externen Kommunikationsmittels 8 überprüft, wobei die Merkmale 12 in den angegebenen Beispielen insgesamt drei Identifikationskategorien zugeordnet werden können, nämlich dem individuellen, immateriellen Identifikationswissen eines menschlichen ersten Kommunikationsmittels 8, dem Besitz eines materiellen oder immateriellen Identifikationsmittels oder dem biometrischen Merkmalen eines menschlichen externen Kommunikationsmittels 8.

In den ersten Teilschritten 101a, 102a der ersten Echtheitsprüfung 101 und der zweiten Echtheitsprüfung 102 sind drei Beispiele für die Abfrage bzw. Eingabe entsprechender Merkmale 12 dargestellt. In dem ganz links dargestellten Beispiel wird zunächst ein individuelles, immaterielles Identifikationswissen in Form einer Geheimzahl (PIN) abgefragt. Ferner wird ein biometrisches Merkmal in Form eines Fingerabdrucks abgefragt. In dem zweiten Beispiel, das in der Mitte dargestellt ist, wird als Identifikationsmittel eine geräteindividuelle Maschinenkennung abgerufen (Read HW Serial). Danach wird ein Merkmal 12 der gleichen Identifikationskategorie abgefragt. Das externe Kommunikationsmittel 8 wird aufgefordert, seine RFID-Karte auf das Lesegerät zu legen (Place RFID).

In dem ganz rechts dargestellten Ausführungsbeispiel in Fig. 2 wird ausgenutzt, dass das Identifikationsmittel nur einmalig vergeben wird. Zunächst muss sich das externe Kommunikationsmittel 8 durch Angabe einer SecureID identifizieren. Nachfolgend muss dann die zu dieser Kennung individuell erzeugte One-Time-PIN eingegeben werden (Enter OTP).

Bevorzugt ist vorgesehen, dass bei der ersten Echtheitsprüfung 101 und der zweiten Echtheitsprüfung 102 Merkmale 12 verschiedener Identifikationskategorien überprüft werden. Dies trifft auf das ganz links dargestellte Beispiel in Zeile 2 von Fig. 2 zu.

Wenn die erste Echtheitsprüfung 101 oder die zweite Echtheitsprüfung 102 fehlschlägt 106, dann signalisiert 107 das Feldmessgerät 1 den Fehlversuch. Erst nach einem vorgegebenen Zeitintervall 108 wird dann eine Wiederholung der Echtheitsprüfungen 101, 102 angestoßen. Die Zeitverzögerung 108 verhindert dabei eine hohe Wiederholfrequenz der Echtheitsprüfung 101, 102, sodass massenhaft automatisierte Angriffe auf die Kommunikationsschnittstelle 6 nicht möglich sind. Eine weitere Gegenmaßnahme zur Verhinderung massenhafter automatisierter Attacken besteht darin, dass das Feldgerät 1 dem externen Kommunikationsmittel 8 nur signalisiert 107, dass die Echtheitsprüfungen 101, 102 insgesamt fehlgeschlagen sind, nicht jedoch welche der beiden Echtheitsprüfungen 101, 102 oder beide Echtheitsprüfungen 101, 102.

In Fig. 1 ist der wohl übliche Fall eines Feldmessgeräts 1 dargestellt, wie er auch schon eingangs in der allgemeinen Beschreibung erörtert worden ist. Üblicherweise weist das Feldmessgerät 1 in seiner Grundausstattung eine Feldbusschnittstelle 20 auf, über die Messdaten des Feldmessgeräts 1 übertragen werden. Bei der Feldbusschnittstelle 20 handelt es sich um die eigentliche Prozessschnittstelle. Im vorliegenden Fall handelt es sich bei der Feldbusschnittstelle 20 um eine analoge Stromschnittstelle, auf die ein digitales HART-Signal aufmoduliert wird. Über den Feldbus 21 ist das Feldmessgerät 1 mit weiteren Feldmessgeräten 22, 23 und mit einem Prozessleitsystem 24 verbunden.

Das zuvor beschriebene Verfahren 2 zur sicheren Kommunikation mit dem Feldmessgerät 1 über die Kommunikationsschnittstelle 6 ist bei dem dargestellten Feldmessgerät 1 durch entsprechende Programmierung der Kommunikationseinheit 5 realisiert.

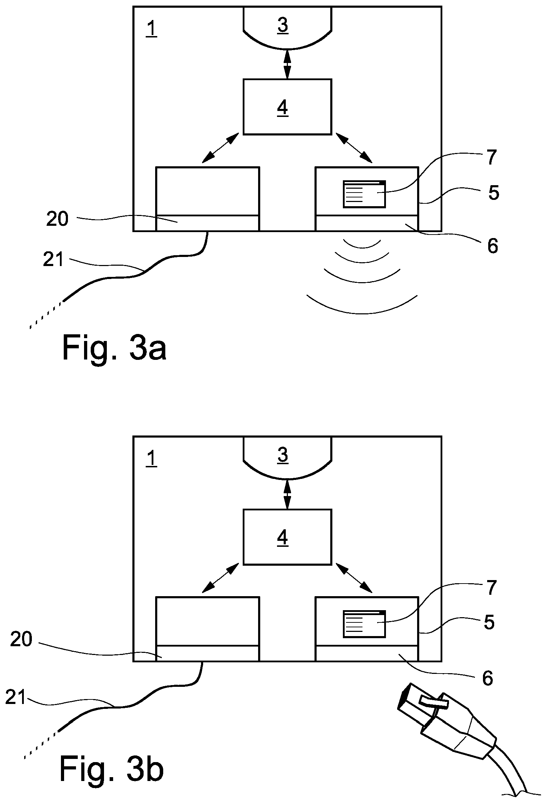

In Fig. 3 sind zwei Varianten eines Feldmessgeräts 1 dargestellt, wobei in Fig. 3a die Kommunikationsschnittstelle 6 der Kommunikationseinheit 5 als Funkschnittstelle ausgebildet ist, hier entsprechend dem WLAN-Standard. Bei dem Ausführungsbeispiel gemäß Fig. 3b ist die Kommunikationsschnittstelle 6 der Kommunikationseinheit 5 als kabelgebundene Ethemetschnittstelle ausgebildet.

### Bezugszeichen

- 1: Feldmessgerät
- 2: Verfahren
- 3: Sensor
- 4: Auswerteeinheit
- 5: Kommunikationseinheit
- 6: Kommunikationsschnittstelle
- 7: Webserver
- 8: externes Kommunikationsmittel
- 9: Webbrowser
- 10: Auswahl
- 11: Eingabefeld
- 12: Merkmal
- 20: Feldbusschnittstelle
- 21: Feldbus
- 22: weiterer Busteilnehmer bzw. weiteres Feldmessgerät
- 23: weiterer Busteilnehmer bzw. weiteres Feldmessgerät
- 24: Prozessleitsystem
- 101: erste Echtheitsprüfung
- 102: zweite Echtheitsprüfung
- 103: erfolgreicher Absolvierung
- 104: weitere Kommunikation
- 105: autorisieren
- 106: Fehlschlagen der Echtheitsprüfung
- 107: Signalisieren des Fehlschlags der Echtheitsprüfung
- 108: vorgegebenes Zeitintervall

## Patentansprüche

1. Verfahren (2) zur sicheren Kommunikation mit einem Feldmessgerät (1) der Prozesstechnik, wobei das Feldmessgerät (1) einen Sensor (3), eine Auswerteeinheit (4), eine Feldbusschnittstelle (20) zur Übermittlung der von dem Feldmessgerät (1) erfassten und bereitgestellten Messdaten an andere Busteilnehmer (22, 23) und/oder an ein Prozessleitsystem (24) und eine Kommunikationseinheit (5) mit einer Kommunikationsschnittstelle (6) aufweist, wobei auf der Kommunikationseinheit (5) ein Webserver (7) implementiert ist, wobei mittels der Kommunikationsschnittstelle (6) von extern auf den Webserver (7) zugegriffen werden kann,
wobei bei Kontaktaufnahme (100) durch ein externes Kommunikationsmittel (8) mit dem Webserver (7) über die Kommunikationsschnittstelle (6) von dem Feldmessgerät (1) eine erste Echtheitsprüfung (101) des externen Kommunikationsmittels (8) ausgeführt wird und eine zweite Echtheitsprüfung (102) des externen Kommunikationsmittels (8) ausgeführt wird, wobei bei der ersten Echtheitsprüfung (101) und der zweiten Echtheitsprüfung (102) Merkmale des ersten Kommunikationsmittels (8) überprüft werden, und nach erfolgreicher Absolvierung (103) der ersten Echtheitsprüfung (101) und der zweiten Echtheitsprüfung (102) von dem Feldmessgerät (1) eine weitere Kommunikation (104) mit dem externen Kommunikationsmittel (8) mit dem Webserver (7) autorisiert (105) wird, wobei es sich bei der ersten Echtheitsprüfung (102) und der zweiten Echtheitsprüfung (102) ausdrücklich nicht um eine Captcha-Funktionalität zur Unterscheidung zwischen menschlichen und maschinellen externen Kommunikationsmitteln (8) handelt und wobei über die Kommunikationsschnittstelle (6) zugreifbare bzw. übermittelbare Daten keine Messdaten sind.

2. Verfahren (2) nach Anspruch 1, **dadurch gekennzeichnet, dass** bei der ersten Echtheitsprüfung (101) und der zweiten Echtheitsprüfung (102) ein Merkmal (12) des externen Kommunikationsmittels (8) der folgenden Identifikationskategorien überprüft wird: das individuelle, immaterielle Identifikationswissen eines menschlichen externen Kommunikationsmittels (8), der Besitz eines materiellen oder immateriellen Identifikationsmittels, ein biometrisches Merkmal eines menschlichen externen Kommunikationsmittels (8).

3. Verfahren (2) nach Anspruch 2, **dadurch gekennzeichnet, dass** bei der ersten Echtheitsprüfung (101) und der zweiten Echtheitsprüfung (102) Merkmale (12) verschiedener Identifikationskategorien überprüft werden.

4. Verfahren (2) nach Anspruch 2 oder 3, **dadurch gekennzeichnet, dass** das individuelle, immaterielle Identifikationswissen eines menschlichen externen Kommunikationsmittels ein Passwort, eine Geheimzahl (PIN) oder die Antwort auf eine Sicherheitsfrage ist.

5. Verfahren (2) nach Anspruch 2 oder 3, **dadurch gekennzeichnet, dass** das materielle oder immaterielle Identifikationsmittel eine Chipkarte, insbesondere in Form einer Smartcard oder einer Signaturkarte, eine Magnetstreifenkarte, ein RFID-Chip, ein kryptografischer Schlüssel, insbesondere in Form eines Private Keys oder eines Public Keys eines asymmetrischen Verschlüsselungsverfahrens, eine SIM-Karte, ein digitales Zertifikat, insbesondere ein SSL-Zertifikat, ein One-Time-PIN, insbesondere für SecurID oder eine geräteindividuelle Maschinenkennung, insbesondere die Seriennummer einer Hardwarekomponente einer angeschlossenen Hardware ist.

6. Verfahren (2) nach Anspruch 2 oder 5, **dadurch gekennzeichnet, dass** das materielle oder immaterielle Identifikationsmittel nur einmalig oder nur temporär vergeben wird.

7. Verfahren (2) nach Anspruch 2 oder 3, **dadurch gekennzeichnet, dass** das biometrische Merkmal eines menschlichen externen Kommunikationsmittels (8) ein Fingerabdruck, Gesichtskonturen, die Stimme, die Iris des Auges, die Retina des Auges, die Handschrift, die Handgeometrie oder die Handlinienstruktur ist.

8. Verfahren (2) nach einem der Ansprüche 1 bis 7, **dadurch gekennzeichnet, dass** bei fehlgeschlagener (106) erster Echtheitsprüfung (101) und/oder zweiter Echtheitsprüfung (102) das Feldmessgerät (1) den Fehlversuch signalisiert (107) und erst nach einem vorgegebenen Zeitintervall (108) eine Wiederholung der Echtheitsprüfungen (101, 102) erfolgt.

9. Verfahren (2) nach Anspruch 8, **dadurch gekennzeichnet, dass** das Feldmessgerät (1) dem externen Kommunikationsmittel (8) nur signalisiert (107), dass die Echtheitsprüfungen (101, 102) insgesamt fehlgeschlagen sind, nicht jedoch welche der beiden Echtheitsprüfungen oder beide Echtheitsprüfungen (101, 102).

10. Feldmessgerät (1) der Prozesstechnik mit einem Sensor (3), einer Auswerteeinheit (4), einer Feldbusschnittstelle (20) zur Übermittlung der von dem Feldmessgerät (1) erfassten und bereitgestellten Messdaten an andere Busteilnehmer (23, 24) und/oder an ein Prozessleitsystem (24) und einer Kommunikationseinheit (5), wobei die Kommunikationseinheit (5) eine Kommunikationsschnittstelle (6) aufweist, wobei auf der Kommunikationseinheit (5) ein Webserver (7) implementiert ist, wobei mittels der Kommunikationsschnittstelle (6) von extern auf den Webserver (7) zugegriffen werden kann,
wobei bei Kontaktaufnahme (100) durch ein externes Kommunikationsmittel (8) mit dem Webserver (7) über die Kommunikationsschnittstelle (6) das Feldmessgerät dazu eingerichtet ist, eine erste Echtheitsprüfung (101) des externen Kommunikationsmittels (8) auszuführen und eine zweite Echtheitsprüfung (102) des externen Kommunikationsmittels (8) auszuführen, wobei das Feldmessgerät (1) dazu eingerichtet ist, bei der ersten Echtheitsprüfung (101) und der zweiten Echtheitsprüfung (102) Merkmale des externen Kommunikationsmittels (8) zu überprüfen, wobei nach erfolgreicher Absolvierung (103) der ersten Echtheitsprüfung (101) und der zweiten Echtheitsprüfung (102) das Feldmessgerät (1) dazu eingerichtet ist, eine weitere Kommunikation (104) mit dem externen Kommunikationsmittel (8) mit dem Webserver (7) zu autorisieren, wobei es sich bei der ersten Echtheitsprüfung (102) und der zweiten Echtheitsprüfung (102) ausdrücklich nicht um eine Captcha-Funktionalität zur Unterscheidung zwischen menschlichen und maschinellen externen Kommunikationsmitteln (8) handelt und wobei über die Kommunikationsschnittstelle (6) zugreifbare bzw. übermittelbare Daten keine Messdaten sind.

11. Feldmessgerät (1) nach Anspruch 10, **dadurch gekennzeichnet, dass** es sich bei der Feldbusschnittstelle (20), über die Messdaten des Feldmessgeräts (1) übertragen werden, um eine analoge Stromschnittstelle, eine digitale HART-Schnittstelle oder eine Profibusschnittstelle handelt

12. Feldmessgerät (1) nach Anspruch 10 oder 11, **dadurch gekennzeichnet, dass** das Verfahren (2) gemäß einem der Ansprüche 2 bis 9 gerätetechnisch auf dem Feldmessgerät (1) automatisch ausführbar implementiert ist, insbesondere durch entsprechende Programmierung und/oder hardwaremäßige Realisierung der Auswerteeinheit (4) und/oder der Kommunikationseinheit (5).

13. Feldmessgerät (1) nach einem der Ansprüche 10 bis 12, **dadurch gekennzeichnet, dass** die Kommunikationsschnittstelle (6) der Kommunikationseinheit (5) als Funkschnittstelle ausgebildet ist.

14. Feldmessgerät (1) nach einem der Ansprüche 10 bis 13, **dadurch gekennzeichnet, dass** die Kommunikationsschnittstelle (6) der Kommunikationseinheit (5) als kabelgebundene Ethernetschnittstelle ausgebildet ist.

## Claims

1. Method (2) for secure communication with a field measuring device (1) of process technology, wherein the field measuring device (1) comprises a sensor (3), an evaluation unit (4), a fieldbus interface (20) for the transmission of measurement data detected and provided by the field measuring device (1) to other bus devices (22, 23) and/or to a process control system (24), and a communication unit (5) with a communication interface (6), wherein a web server (7) is implemented on the communication unit (5), wherein the web server (7) can be externally accessed by means of the communication interface (6),
wherein upon contact (100) by an external communication means (8) with the web server (7) via the communication interface (6), a first authenticity check (101) of the external communication means (8) is carried out by the field measuring device (1) and a second authenticity check (102) of the external communication means (8) is carried out and, after successful completion (103) of the first authenticity check (101) and the second authenticity check (102), further communication (104) of the external communication means (8) with the web server (7) is authorized (105) by the field measuring device (1), wherein the first authenticity check (101) and the second authenticity check (102) are explicitly not captcha functionality for distinguishing between human and machine external communication means (8), and wherein data that is accessible or transmittable via the communication interface (6) is not measurement data.

2. Method (2) according to claim 1, **characterized in that** a feature (12) of the external communication means (8) of the following identification categories is checked in the first authenticity check (101) and the second authenticity check (102): the individual, immaterial identification knowledge of a human external communication means (8), the possession of a physical or immaterial identification means, a biometric feature of a human external communication means (8).

3. Method (2) according to claim 2, **characterized in that** features (12) of different identification categories are checked in the first authenticity check (101) and the second authenticity check (102).

4. Method (2) according to claim 2 or 3, **characterized in that** the individual, immaterial identification knowledge of a human external communication means is a password, a personal identification number (PIN) or the answer to a security question.

5. Method (2) according to claim 2 or 3, **characterized in that** the physical or immaterial identification means is a chip card, in particular in the form of a smart card or a signature card, a magnetic strip card, an RFID chip, a cryptographic key, in particular in the form of a private key or a public key of an asymmetric encryption method, a SIM card, a digital certificate, in particular an SSL certificate, a one-time PIN, in particular for SecurID or a device-specific machine identifier, in particular the serial number of a hardware component of connected hardware.

6. Method (2) according to claim 2 or 5, **characterized in that** the material or immaterial identification means is assigned only once or only temporarily.

7. Method (2) according to claim 2 or 3, **characterized in that** the biometric feature of a human external communication means (8) is a fingerprint, facial contours, the voice, the iris of the eye, the retina of the eye, handwriting, hand geometry or the palm line structure.

8. Method (2) according to any one of claims 1 to 7, **characterized in that** in the case of a failed (106) first authenticity check (101) and/or second authenticity check (102), the field measuring device (1) signals the failed attempt (107) and a repetition of the authenticity checks (101, 102) only takes place after a predetermined time interval (108).

9. Method (2) according to claim 8, **characterized in that** the field measuring device (1) only signals (107) to the external communication means that the authenticity checks (101, 102) have failed altogether, but not which of the two authenticity checks or whether both authenticity checks (101, 102) have failed.

10. Field measuring device (1) of process technology with a sensor (3), an evaluation unit (4), a field bus interface (20) for the transmission of measurement data detected and provided by the field measuring device (1) to other bus devices (22, 23) and/or to a process control system (24), and a communication unit (5), wherein the communication unit (5) has a communication interface (6), wherein a web server (7) is implemented on the communication unit (5), wherein the web server (7) can be externally accessed by means of the communication interface (6),
wherein, upon contact (100) by an external communication means (8) with the web server (7) via the communication interface (6), the field measuring device (1) is designed to carry out a first authenticity check (101) of the external communication means (8) and a second authenticity check (102) of the external communication means (8), wherein the field measuring device (1) is designed to check features of the external communication means (8) during the first authenticity check (101) and the second authenticity check (102), wherein, after successful completion (103) of the first authenticity check (101) and the second authenticity check (102), the field measuring device (1) is designed to authorize further communication (104) of the external communication means (8) with the web server (7), wherein the first authenticity check (101) and the second authenticity check (102) are explicitly not captcha functionality for distinguishing between human and machine external communication means (8), and wherein data accessible or transmittable via the communication interface (6) is not measurement data.

11. Field measuring device (1) according to claim 10, **characterized in that** the field measuring device (1) additionally has a field bus interface (20), via which measurement data of the field measuring device (1) are transmitted, in particular wherein it is an analog current interface, a digital HART interface or a Profibus interface.

12. Field measuring device (1) according to claim 10 or 11, **characterized in that** the method (2) according to any one of claims 2 to 9 is implemented on the field measuring device (1) with device technology to be automatically executable, in particular by means of appropriate programming and/or hardware implementation of the evaluation unit (4) and/or the communication unit (5).

13. Field measuring device (1) according to any one of claims 10 to 12, **characterized in that** the communication interface (6) of the communication unit (5) is designed as a wireless interface.

14. Field measuring device (1) according to any one of claims 10 to 13, **characterized in that** the communication interface (6) of the communication unit (5) is designed as a wired Ethernet interface.

## Revendications

1. Procédé (2) permettant une communication sécurisée avec un appareil de mesure de terrain (1) issu de la technique des processus, dans lequel l'appareil de mesure de terrain (1) présente un capteur (3), une unité d'évaluation (4), une interface de bus de terrain (20) pour transmettre les données de mesure, détectées et fournies par l'appareil de mesure de terrain (1), à d'autres participants au bus (22, 23) et/ou à un système de gestion de processus (24) et à une unité de communication (5) munie d'une interface de communication (6), dans lequel un serveur web (7) est mis en œuvre sur l'unité de communication (5), dans lequel l'interface de communication (6) permet d'accéder au serveur web (7) de l'extérieur,
dans lequel, en cas de prise de contact (100) par un moyen de communication externe (8) avec le serveur web (7) par l'intermédiaire de l'interface de communication (6), l'appareil de mesure de terrain (1) effectue un premier contrôle d'authenticité (101) du moyen de communication externe (8), et un deuxième contrôle d'authenticité (102) du moyen de communication externe (8), dans lequel, lors du premier contrôle d'authenticité (101) et du deuxième contrôle d'authenticité (102), des particularités du premier moyen de communication (8) sont contrôlées, et après que le premier contrôle d'authenticité (101) et le deuxième contrôle d'authenticité (102) ont été réalisés avec succès (103), l'appareil de mesure de terrain (1) autorise (105) une communication supplémentaire (104) avec le moyen de communication externe (8) avec le serveur web (7), dans lequel le premier contrôle d'authenticité (102) et le deuxième contrôle d'authenticité (102) ne sont explicitement pas des fonctionnalités CAPTCHA pour différencier des moyens de communication externes (8) humains et mécaniques, et dans lequel des données accessibles ou transmissibles par l'intermédiaire de l'interface de communication (6) ne sont pas des données de mesure.

2. Procédé (2) selon la revendication 1, **caractérisé en ce que** lors du premier contrôle d'authenticité (101) et du deuxième contrôle d'authenticité (102), une particularité (12) du moyen de communication externe (8) des catégories d'identification suivantes est contrôlée : la connaissance d'identification immatérielle individuelle d'un moyen de communication externe humain (8), la possession d'un moyen d'identification matériel ou immatériel, une particularité biométrique d'un moyen de communication externe humain (8).

3. Procédé (2) selon la revendication 2, **caractérisé en ce que** lors du premier contrôle d'authenticité (101) et du deuxième contrôle d'authenticité (102), des particularités (12) de différentes catégories d'identification sont contrôlées.

4. Procédé (2) selon la revendication 2 ou 3, **caractérisé en ce que** la connaissance d'identification immatérielle individuelle d'un moyen de communication externe humain est un mot de passe, un numéro d'identification personnel (PIN) ou la réponse à une question de sécurité.

5. Procédé (2) selon la revendication 2 ou 3, **caractérisé en ce que** le moyen d'identification matériel ou immatériel est une carte à puce, en particulier sous la forme d'une carte intelligente ou d'une carte de signature, d'une bande magnétique, d'une puce RFID, d'une clé cryptographique, en particulier sous la forme d'une clé privée ou d'une clé publique d'un procédé de cryptage asymétrique, d'une carte SIM, d'un certificat numérique, en particulier d'un certificat SSL, d'un PIN à usage unique, en particulier pour SecurID ou un identifiant de machine spécifique à l'appareil, en particulier le numéro de série d'un composant matériel d'un matériel connecté.

6. Procédé (2) selon la revendication 2 ou 5, **caractérisé en ce que** le moyen d'identification matériel ou immatériel n'est attribué qu'une seule fois ou de façon temporaire seulement.

7. Procédé (2) selon la revendication 2 ou 3, **caractérisé en ce que** la particularité biométrique d'un moyen de communication externe humain (8) est une empreinte digitale, les traits d'un visage, la voix, l'iris de l'œil, la rétine de l'œil, l'écriture manuelle, la géométrie de la main ou la structure des lignes de la main.

8. Procédé (2) selon l'une quelconque des revendications 1 à 7, **caractérisé en ce qu'**en cas de premier contrôle d'authenticité (101) et/ou de deuxième contrôle d'authenticité (102) échoué(s) (106), l'appareil de mesure de terrain (1) signale (107) la tentative échouée, et une nouvelle tentative des contrôles d'authenticité (101, 102) n'intervient qu'après un intervalle de temps prédéfini (108).

9. Procédé (2) selon la revendication 8, **caractérisé en ce que** l'appareil de mesure de terrain (1) signale (107) au moyen de communication externe (8) uniquement que les contrôles d'authenticité (101, 102) ont échoué globalement mais pas lequel des deux contrôles d'authenticité a échoué ou si les deux contrôles d'authenticité (101, 102) ont échoué.

10. Appareil de mesure de terrain (1) issu de la technique des processus, comprenant un capteur (3), une unité d'évaluation (4), une interface de bus de terrain (20) pour transmettre les données de mesure détectées et fournies par l'appareil de mesure de terrain (1) à d'autres participants au bus (23, 24) et/ou à un système de gestion de processus (24) et à une unité de communication (5), dans lequel l'unité de communication (5) présente une interface de communication (6), dans lequel un serveur web (7) est mis en œuvre sur l'unité de communication (5), dans lequel l'interface de communication (6) permet d'accéder au serveur web (7) de l'extérieur,
dans lequel, en cas de prise de contact (100) par un moyen de communication externe (8) avec le serveur web (7) par l'intermédiaire de l'interface de communication (6), l'appareil de mesure de terrain est conçu pour effectuer un premier contrôle d'authenticité (101) du moyen de communication externe (8), et un deuxième contrôle d'authenticité (102) du moyen de communication externe (8), dans lequel l'appareil de mesure de terrain (1) est conçu pour contrôler lors du premier contrôle d'authenticité (101) et du deuxième contrôle d'authenticité (102) des particularités du premier moyen de communication (8), dans lequel, après que le premier contrôle d'authenticité (101) et le deuxième contrôle d'authenticité (102) ont été réalisés avec succès (103), l'appareil de mesure de terrain (1) est conçu pour autoriser une communication supplémentaire (104) avec le moyen de communication externe (8) avec le serveur web (7), dans lequel le premier contrôle d'authenticité (102) et le deuxième contrôle d'authenticité (102) ne sont explicitement pas des fonctionnalités CAPTCHA pour différencier des moyens de communication externes (8) humains et mécaniques, et dans lequel des données accessibles ou transmissibles par l'intermédiaire de l'interface de communication (6) ne sont pas des données de mesure.

11. Appareil de mesure de terrain (1) selon la revendication 10, **caractérisé en ce que** l'interface de bus de terrain (20) par laquelle les données de mesure de l'appareil de mesure de terrain (1) sont transmises est une interface de courant analogique, une interface HART numérique ou une interface Profibus.

12. Appareil de mesure de terrain (1) selon la revendication 10 ou 11, **caractérisé en ce que** le procédé (2) selon l'une quelconque des revendications 2 à 9 est mis en œuvre techniquement sur l'appareil de mesure de terrain (1) de manière exécutable automatiquement, en particulier par une programmation adéquate et/ou une réalisation matérielle de l'unité d'évaluation (4) et/ou de l'unité de communication (5).

13. Appareil de mesure de terrain (1) selon l'une quelconque des revendications 10 à 12, **caractérisé en ce que** l'interface de communication (6) de l'unité de communication (5) est réalisée sous forme d'interface radio.

14. Appareil de mesure de terrain (1) selon l'une quelconque des revendications 10 à 13, **caractérisé en ce que** l'interface de communication (6) de l'unité de communication (5) est réalisée sous forme d'interface Ethernet câblée.
